# EUROPÄISCHE PATENTSCHRIFT

(11) **EP 1 930 060 B1**
(45) Veröffentlichungstag und Bekanntmachung des Hinweises auf die Patenterteilung: **30.11.2011**
(21) Anmeldenummer: 07115562.6
(22) Anmeldetag: 03.09.2007
(51) Int. Cl.: B01D 46/24, B01D 46/52, F01N 3/022

(54) **Dieselpartikelfilter mit einem keramischen Filterkörper**
Diesel particulate filter with a ceramic filter body
Filtre à particules diesel doté d'un corps de filtre céramique

(30) Priorität: 27.11.2006 DE 102006056196
(43) Veröffentlichungstag der Anmeldung: 11.06.2008
(73) Patentinhaber: MANN+HUMMEL GmbH, 71638 Ludwigsburg (DE)
(72) Erfinder: Franz, Andreas, 71638, Ludwigsburg (DE); Linhart, Jochen, 71409, Schwaikheim (DE); Gerlach, Karin, 72800, Eningen (DE)

(56) Entgegenhaltungen:
- EP-A- 0 225 402
- EP-A- 1 260 683
- EP-A- 1 522 686
- EP-A- 1 797 940
- WO-A-2006/005668
- JP-A- 2 107 308

## Beschreibung

### Technisches Gebiet

Die Erfindung betrifft einen Dieselpartikelfilter mit einem keramischen Filterkörper zur Filtrierung eines Abgasstromes eines Dieselmotors, wobei der Filterkörper flächige und poröse Filterabschnitte aufweist, die zur Durchströmung mit dem Abgasstrom quer zur Fläche der Filterabschnitte vorgesehen sind.

### Stand der Technik

Aus der EP 1 260 683 A1 ist ein Abgasfilter mit variabler Zellengröße bekannt. Aus der DE 35 01 182 A1 ist ein Abgasfilter für Dieselmotoren bekannt. Die dort offenbarten keramischen Filterkörper weisen geschichtete, flächige und poröse Filterabschnitte auf, zwischen denen Gaskanäle gebildet sind. Die Gaskanäle sind wechselseitig verschlossen. Ein auf einer Seite in die dorthin offenen Gaskanäle einströmender Abgasstrom wird durch die Verschlussstopfen gezwungen, die porösen Filterabschnitte quer zu ihrer Fläche zu durchströmen. Die auf der gegenüberliegenden Seite befindlichen Abgaskanäle sind in Abströmrichtung offen und geben den filtrierten Abgasstrom frei.

Zur Herstellung der dort gezeigten keramischen Filterkörper werden keine Angaben gemacht. Geometrisch vergleichbare Körper, wie sie beispielsweise von Abgaskatalysatoren bekannt sind, werden durch Extrudieren hergestellt. Dies erfordert einen hohen Werkzeugaufwand für die Formgebung. Die Freiheitsgrade bei der Formgebung des Filterkörpers und insbesondere der Filterabschnitte sowie der Gaskanäle ist durch den Extrusionsprozess eingeschränkt. Eine strömungsoptimale Ausgestaltung des Dieselpartikelfilters ist schwierig.
Die WO 2006/005668 A1 zeigt einen keramischen Abgasfilter für Brennkraftmaschinen, dessen Filterkörper aus keramisch imprägniertem Papier gebildet ist. Je eine glatte und eine wellige imprägnierte Papierbahn werden zu einem Halbzeug unter Bildung von Gaskanälen geschichtet und zu einem Wickelkörper aufgerollt. Die Wellen der gewellten Papierbahn haben über ihre gesamte Länge eine konstante Form, so dass auch die Gaskanäle entlang ihrer Lauflänge einen konstanten Querschnitt aufweisen.

Der Erfindung liegt die Aufgabe zugrunde, einen gattungsgemäßen Dieselpartikelfilter derart weiterzubilden, dass mit geringem Aufwand ein verbessertes Filtrierergebnis möglich ist.

Diese Aufgabe wird durch einen Dieselpartikelfilter mit den Merkmalen des Anspruchs 1 gelöst.

### Offenbarung der Erfindung

Es wird ein Dieselpartikelfilter mit einem keramischen Filterkörper aus einem Keramikmaterial vorgeschlagen, wobei der Filterkörper aus mindestens einer keramisch imprägnierten Faserbahn, insbesondere aus Papier derart unter Temperatur durch Sintern gebildet ist, dass Fasern des Fasermaterials freigebrannt sind. Das Keramikmaterial ist unter Bildung des durchgängig zwischen seinen beiden Oberflächen porösen und gasdurchlässigen lässigen Filterabschnittes zusammengesintert, wobei mindestens eine Faserbahn zur Bildung der Gaskanäle gewellt ausgeführt und zur Bildung des Filterkörpers in mehreren Schichten übereinander geschichtet ist. Der hier gewählte Begriff der Wellenform umfasst Wellen mit gerundetem, beispielsweise sinusförmigem Querschnitt, aber auch solche mit eckigem, beispielsweise dreieckigem, rechteckigem oder trapezförmigem Querschnitt. Es kann jede geeignete, auch unregelmäßige Wellenform vorgesehen sein, die durch einen auf und ab führenden Verlauf die Querschnitte der Gaskanäle formt. Erfindungsgemäß liegen zur Bildung des geschichteten Filterkörpers bezogen auf seine Schichtungsrichtung abwechselnd eine gewellte Faserbahn und eine glatte Faserbahn übereinander. Dabei sind benachbarte Gaskanäle wechselseitig auf einer Einströmseite und auf einer Ausströmseite verschlossen und die Filterabschnitte durch die gewellte Faserbahn gebildet. Das keramische Material der glatten Faserbahn ist im gesinterten Zustand erfindungsgemäß zumindest näherungsweise gasundurchlässig bzw. von verringerter Gasdurchlässigkeit.

Der Querschnitt zumindest eines Teiles der Gaskanäle verändert sich von einer Einströmseite zu einer Ausströmseite hin. Diese beim Extrusionsprozess nach dem Stand der Technik nicht ausführbare Gestaltung mit veränderlichem Kanalquerschnitt wird erst durch die Verwendung von keramisch imprägniertem Fasermaterial möglich. Der Volumenstrom des durch die Gaskanäle laufenden Abgasstromes ändert sich über die Lauflänge, da ein Teil des Volumenstroms sukzessive durch die Filterabschnitte hindurchtritt. Dieser Umstand kann durch den entlang der Lauflänge sich verändernden Kanalquerschnitt berücksichtigt werden. Entlang der Lauflänge kann ein nahezu beliebiges geeignetes Druckprofil im Abgasstrom eingestellt werden, welches eine möglichst gleichförmige Durchströmung der Filterabschnitte in allen Bereichen sicherstellt. Das Filtermaterial ist insgesamt zumindest näherungsweise gleichmäßig über seine Fläche verteilt belastet, ohne das lokale Druckspitzen und damit ein lokal erhöhter Russeintrag auftreten.

Erfindungsgemäß verengt sich der Querschnitt der eingangsseitigen Gaskanäle von der Einströmseite zur Ausströmseite hin. Erfindungsgemäß erweitert sich der Querschnitt der ausgangsseitigen Gaskanäle von der Einströmseite zur Ausströmseite hin. Insbesondere bei einem linear veränderten Querschnittsverlauf stellen sich entlang der Lauflänge der Gaskanäle eine zumindest näherungsweise konstante Strömungsgeschwindigkeit sowie ein zumindest näherungsweise konstanter Druckäbfall an den Filterabschnitten ein. Die Filtrierbelastung der einzelnen Fliterabschnitte ist über ihre gesamte Fläche zumindest näherungsweise konstant. Der Durchströmungswiderstand ist verringert. Wartungsintervalle bzw. Intervalle zwischen Freibrennzyklen sind verlängert.

In einer bevorzugten Ausführungsform weisen die Gaskanäle in der Radialrichtung bzw. in der Schichtungsrichtung eine konstante Höhe auf.
Dies ermöglicht es, aus einem durchgehenden Halbzeug einen Filterrohling in Zylinderform zu wickeln. Auf der Einströmseite und auf der Aus strömseite stehen jeweils gleiche Gesamtquerschnitte zur Verfügung, was zur Minimierung des Durchströmungswiderstandes und des damit verbundenen Druckabfalls beiträgt.

In vorteilhafter Weiterbildung ist die gewellte Faserbahn eindimensional gekrümmt ausgeführt. Bei einer derartigen eindimensionalen Krümmung liegt jeder Punkt der gewellten Faserbahn auf einer Linie, die innerhalb der Faserbahn vom eingangsseitigen Ende zum ausgangsseitigen Ende geradlinig verläuft. Diese Wellenform kann durch einfache Biegung der Faserbahn erzeugt werden, ohne dass eine Dehnung oder Stauchung in der Ebene der Faserbahn erforderlich ist. Die erforderlichen Umformungskräfte und die Materialbelastungen sind gering. Es kann aber auch eine mehrdimensionale Formgebung zur Erzielung von unregelmäßigen Querschnittsverläufen der Strömungskanäle zweckmäßig sein, wobei die Faserbahn in ihrer Ebene innerhalb zulässiger Grenzen und unter Vermeidung von Faltenbildung gedehnt oder gestaucht wird.

Die gewellten Faserbahnen können eben übereinander gestapelt werden und sind bevorzugt zu einem Wickelkörper aufgewickelt. Die Verwendung von keramisch imprägnierten Faserbahnen erlaubt eine nahezu beliebige Formgebung. Im imprägnierten, aber noch nicht gesinterten Zustand halten die Faserbahnen den daraus gebildeten Filtergrundkörper in Form. Die Formstabilität in diesem Zustand reicht aus, auch komplexe Formgebungen mit dünnen Kanalquerschnitten und dünnen Wandstärken herzustellen. Beim Sinterprozess brennen die Fasern der Faserbahnen frei und erzeugen die gewünschte durchgängige Porosität der Filterabschnitte. Im Vergleich zu einem vorbekannten Extrusionsprozess lassen sich dünnere Wandstärken und nahezu beliebige Kanalquerschnitte bzw. Querschnittsverläufe herstellen. Bezogen auf den gleichen Anströmquerschnitt können sehr viel mehr Einzelkanäle zur Verfügung gestellt werden. Die Porengröße kann durch verschiedene Fasermaterialien bzw. keramische Imprägnierungen eingestellt werden. Bezogen auf die gewünschte Filtrierwirkung weist der erfindungsgemäß ausgeführte Dieselpartikelfilter einen deutlich geringeren Druckverlust bei der Durchströmung auf.

Es kann zweckmäßig sein, den Filterkörper beispielsweise ausschließlich aus gewellten Faserbahnen auszubilden. In bevorzugter Weiterbildung liegen zur Bildung des geschichteten Filterkörpers bezogen auf seine Schichtungsrichtung abwechselnd eine gewellte Faserbahn und eine glatte Faserbahn übereinander. Insbesondere kann ein Halbzeug vorgesehen sein, welches aus einer gewellten und einer daran anhaftenden glatten Faserbahn gebildet ist, wobei das Halbzeug zu einem Rohling des Filterkörpers aufgewickelt oder gestapelt ist. Die abwechselnde Anordnung von glatten und gewellten Faserbahnen stellt sicher, dass die einzelnen Gaskanäle des Dieselpartikelfilters einen präzise definierten Querschnitt aufweisen.

Je nach Bedarf kann eine tangentiale und/oder radiale Durchströmung der Filterabschnitte zweckmäßig sein. In einer bevorzugten Ausführungsform sind die Filterabschnitte durch die gewellte Faserbahn gebildet. Das keramische Material der glatten Faserbahn ist im gesinterten Zustand zweckmäßig zumindest näherungsweise gasundurchlässig bzw. von verringerter Gasdurchlässigkeit. Es entsteht eine im Wesentlichen tangentiale Durchströmung der Filterabschnitte. Dies erlaubt es, im gesamten Filterquerschnitt zumindest näherungsweise gleichmäßige Strömungs- und Filtrierverhältnisse an den einzelnen Filterabschnitten sicherzustellen.

Bevorzugt sind benachbarte Gaskanäle wechselseitig auf einer Einströmseite und auf einer Ausströmseite verschlossen. Die auf der Ausströmseite verschlossenen Gaskanäle stellen eingangsseitige Gaskanäle dar, während durch die auf der Eingangsseite verschlossenen Gaskanäle ausgangsseitige Gaskanäle gebildet sind. Das wechselseitige Verschließen stellt beim Einströmen eine Aufstauwirkung her, die das einströmende Abgas dazu zwingt, durch die porösen Filterabschnitte hindurchzutreten. Die eingangsseitig verschlossenen, zum Ausgang hin offenen Gaskanäle stellen eine präzise definierte Abführung des filtrierten Abgases sicher.

Das Verschließen der Gaskanäle kann beispielsweise durch Eindrücken der gewellten Faserbahnen an geeigneter Stelle, gegebenenfalls unterstützt durch eine Verleimung erfolgen. In bevorzugter Weiterbildung sind zum Verschließen der Gaskanäle Verschlussstopfen aus Keramikmaterial vorgesehen, wobei die Verschlussstopfen und die Faserbahn insbesondere zu einem monolithischen Körper zusammengesintert sind. Aus dem keramisch imprägnierten Fasermaterial lassen sich sehr kleine Kanalquerschnitte herstellen, in dessen Folge auch nur sehr kleine Verschlussstopfen erforderlich sind. Es entsteht ein materialeinheitlicher Filterkörper. Unter Verzicht auf zusätzliche Befestigungsmaterialien für die Verschlussstopfen kann der Filter unter Vermeidung von thermischen Rissbildungen hohen Temperaturbelastungen ausgesetzt werden.

In zweckmäßiger Weiterbildung weist mindestens eine Faserbahn nicht imprägnierte Abschnitte zur Bildung von Öffnungen im Filterkörper auf. Die nicht imprägnierten Abschnitte der Faserbahn verbrennen beim Sinterprozess. Durch das Fehlen einer keramischen Imprägnierung verbleiben an dieser Stelle Öffnungen, die beispielsweise einen ungehinderten Gasaustausch zwischen zwei benachbarten Gaskanälen zulassen. Dies ermöglicht es, z. B. im Ein- oder Ausströmbereich vor bzw. nach den angrenzenden Verschlussstopfen den Strömungsquerschnitt sämtlicher Gaskanäle beispielsweise für eine Verwirbelung oder für eine katalytische Abgasbehandlung zu nutzen.

### Kurze Beschreibung der Zeichnungen

Ausführungsbeispiele der Erfindung sind nachfolgend anhand der Zeichnung näher beschrieben. Es zeigen:
- Figur 1: in schematischer Perspektivdarstellung einen erfindungsgemäßen keramischen Filterkörper aus keramisch imprägnierten, gewickelten und gesinterten Faserbahnen für den Einsatz in einem Dieselpartikelfilter,
- Figur 2: eine schematische Längsschnittdarstellung zweier benachbarter Gaskanäle mit einer zwischenliegenden Öffnung für einen ungehinderten Gasaustausch,
- Figur 3: eine Schemadarstellung einer Walz- und Rakelanlage zur Imprägnierung von Faserbahnen mit Keramikmaterial sowie zur Formgebung und Fügung zu einem Halbzeug,
- Figur 4: eine vergrößerte Schemadarstellung des Halbzeuges nach Figur 3 mit im Querschnitt veränderlichen Gaskanälen und mit Einzelheiten zur Verbindung einer gewellten und einer glatten imprägnierten Faserbahn zur Bildung der Gaskanäle,
- Figur 5: eine schematische Perspektivdarstellung einer mit der Anordnung nach Fig. 3 teilweise imprägnierten, mit Ausschnitten versehenen Faserbahn.

### Ausführungsform(en) der Erfindung

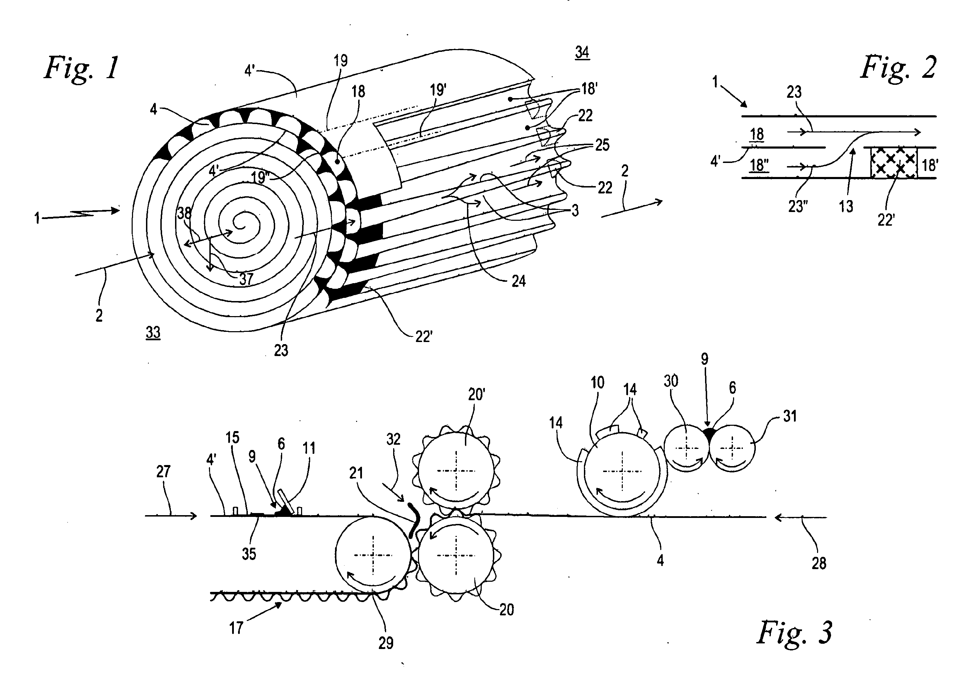

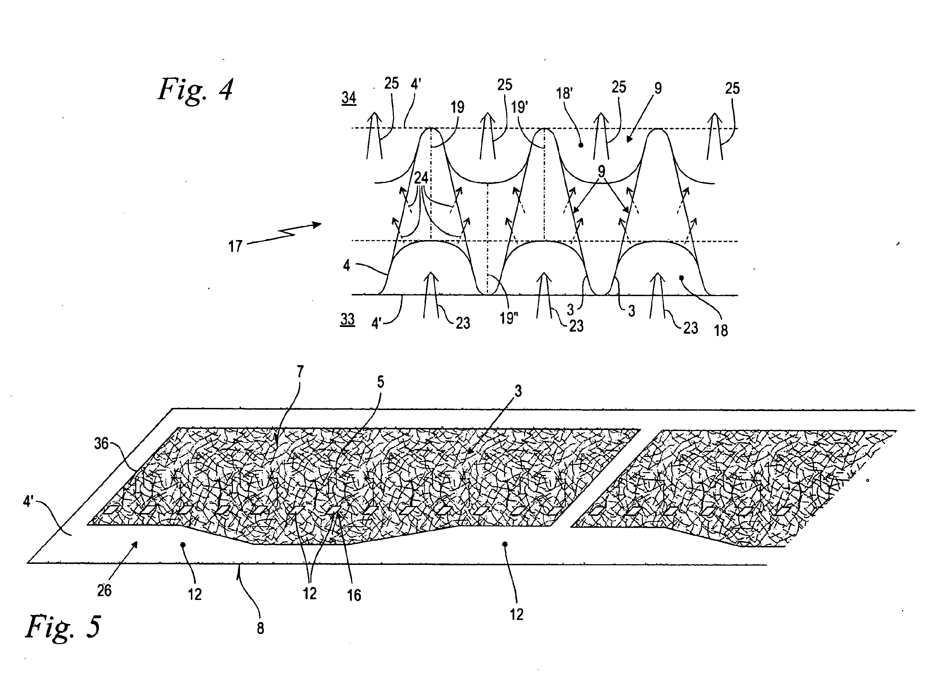

Figur 1 zeigt in schematischer, teilweise geschnittener Perspektivdarstellung einen erfindungsgemäßen keramischen Filterkörper 1. Der Filterkörper 1 ist Teil eines nicht näher dargestellten Dieselpartikelfilters und zur Filtrierung eines Abgasstromes 2 eines Dieselmotors vorgesehen. Der Filterkörper 1 ist durch weiter unten im Zusammenhang mit den Figuren 3 bis 5 näher beschriebene, keramisch imprägnierten Faserbahnen 4, 4' gebildet. Die Faserbahnen 4, 4' sind entsprechend der Darstellung nach den Figuren 3 und 4 zu einem Halbzeug 17 zusammengefügt, welches zu dem näherungsweise zylindrisch ausgeführten Filterkörper 1 aufgewickelt ist. Durch das Aufwickeln der keramisch imprägnierten Faserbahnen 4, 4' zu einem Wickelkörper entsteht eine Schichtungsrichtung, die zu einer Radialrichtung 37 des zylindrischen Filterkörpers 1 identisch ist. Alternativ kann es auch zweckmäßig sein, mehrere gewellte Faserbahnen 4 bzw. Halbzeuge 17 (Figuren 3 und 4) in einer Ebene anzuordnen und stapelartig übereinanderzuschichten.

Es ist eine Durchströmung des Filterkörpers 1 vom Abgasstrom 2 in einer Axialrichtung 38 des Filterkörpers 1 von einer Einströmseite 33 zu einer Ausströmseite 34 vorgesehen. Dazu ist die erste Faserbahn 4 gewellt ausgeführt, während eine zweite Faserbahn 4' im Wesentlichen glatt ist. Der hier gewählte Begriff der Wellenform umfasst Wellen mit gerundetem, beispielsweise sinusförmigem Querschnitt, aber auch solche mit eckigem, beispielsweise dreieckigem, rechteckigem oder trapezförmigem Querschnitt. In Folge der Stapelung bzw. Wickelstruktur liegen bezogen auf eine radiale Richtung 37 des Filterkörpers 1 abwechselnd eine gewellte Faserbahn 4 und eine glatte Faserbahn 4' übereinander. Die gewellte Faserbahn 4 ist mit der zweiten, glatten Faserbahn 4' entlang von einer Vielzahl zumindest näherungsweise parallel verlaufender Kontaktlinien 19, 19', 19" verbunden. Durch die Wellenform der Faserbahn 4, die glatte Form der weiteren Faserbahn 4' und die Wickelstruktur entsteht eine Vielzahl von zumindest näherungsweise achsparallel verlaufenden Gaskanälen 18, 18' mit entlang der Axialrichtung 38 konstanter, in der Radialrichtung 37 gemessener Höhe. In Umfangsrichtung des Filterkörpers 1 sind abwechselnd je ein Gaskanal 18 und ein Gaskanal 18' vorgesehen. Die Gaskanäle 18 sind zur Einströmseite 33 hin offen und in gegenüberliegender Richtung zur Ausströmseite 34 hin mittels Verschlussstopfen 22 verschlossen. Bezogen auf die Umfangsrichtung liegt zwischen zwei Gaskanälen 18 je ein Gaskanal 18', der zur Einströmseite 33 hin mittels eines Verschlussstopfens 22' verschlossen und zur Ausströmseite 34 hin offen ist. Im Betrieb strömt der Abgasstrom 2 entsprechend einem Pfeil 23 achsparallel in die zur Einströmseite 33 hin offenen Gaskanäle 18 ein. Seitenwände der durch die gewellte Faserbahn 4 hergestellten keramischen Struktur bilden flächige und poröse Filterabschnitte 3. Der an den Verschlussstopfen 22 aufgestaute Abgasstrom 2 wird in Umfangsrichtung entsprechend Pfeilen 24 abgelenkt und durchströmt die porösen keramischen Filterabschnitte 3 quer zu ihrer Fläche. Entsprechend den Pfeilen 24 tritt der Abgasstrom 2 durch die Filterabschnitte 3 hindurch in die zur Ausströmseite 34 hin offenen Kanäle 18 ein und strömt aus ihnen entsprechend Pfeilen 25 aus. Beim Durchtritt durch die porösen Filterabschnitte 3 wird der Abgasstrom 2 von mitgeführten Rußpartikeln oder dgl. gereinigt.

Für bestimmte Anwendungsfälle kann es zweckmäßig sein, in den durch die glatte Faserbahn 4' gebildeten Filterbereich Öffnungen 13 einzubringen, deren Herstellung weiter unten beschrieben wird. Der schematischen Längsschnittdarstellung nach Fig. 2 ist hierzu zu entnehmen, dass eine solche Öffnung 13 beispielsweise stromauf eines Verschlussstopfens 22' angeordnet ist. Der eingangsseitige Gaskanal 18 ist durchgängig am Verschlussstopfen 22' vorbeigeführt. Die benachbart angrenzende Kanalstruktur ist durch den Verschlussstopfen 22' in den ausgangsseitigen Gaskanal 18' und einen eingangsseitigen Kanalabschnitt 18" aufgeteilt. Der Abgasstrom 2 (Fig. 1) kann stromauf des Verschlussstopfens 22' unter Ausnutzung des Strömungsquerschnittes der Gaskanäle 18 und der Kanalabschnitte 18" in den Filterkörper 1 einströmen. In diesem Bereich kann beispielsweise eine katalytische Beschichtung unter Ausnutzung des gesamten Strömungsquerschnitts vorgesehen sein. Stromauf des Verschlussstopfens 22' wird das Abgas entsprechend einem Pfeil 23" durch die Öffnung 13 in den eingangsseitigen Gaskanal 18 umgeleitet. Dort vereinigt er sich mit dem Gasstrom nach Pfeil 23, woraus sich die vorstehend beschriebene Filtrierfunktion ergibt. Analog dazu können auch Öffnungen 13 stromab der Verschlussstopfen 22 (Fig. 1) vorgesehen sein.

Ebenso kann es vorteilhaft sein, solche Öffnungen 13 auch in dem durch die gewellte Faserbahn 4 gebildeten Filterbereich vorzusehen. Eine weitere vorteilhafte Möglichkeit besteht darin, neben der in Fig. 1 gezeigten Durchströmung in der Axialrichtung 38 und der Umfangsrichtung auch eine Durchströmung in der Radialrichtung 37 zuzulassen. In diesem Falle sind auch die durch die glatte Faserbahn 4' gebildeten Filterbereiche porös ausgeführt und bilden in radialer Richtung durchströmte Filterabschnitte.

Figur 3 zeigt eine schematische Darstellung einer Vorrichtung zur Herstellung des erfindungsgemäßen Filterkörpers 1 (Figur 1). Zwei Beschickungswalzen 30, 31 der Vorrichtung sind achsparallel zueinander angeordnet und liegen bündig nebeneinander. Sie drehen sich gegenläufig, wobei in einem keilförmigen Zwischenraum oberhalb ihrer Berührlinie ein Keramikmaterial 6 bevorratet ist. Das Keramikmaterial 6 kann ein trockenes Pulver aus feingemahlener Keramik sein, welches für eine Trockenimprägnierung der Faserbahn 4 vorgesehen ist. Im gezeigten Ausführungsbeispiel ist mit dem Keramikmaterial 6 eine wässrige Emulsion 9 hergestellt. Anstelle von Wasser kann auch eine andere geeignete Flüssigkeit oder ein Flüssigkeitsgemisch zweckmäßig sein. Als Keramikmaterial 6 kommt bevorzugt Aluminiumoxid, Cordierit, Mullit, Sliciumcarbid und/oder Aluminiumtitanat jeweils für sich alleine oder auch in verschiedenen Kombinationen miteinander in Betracht. Eine weitere Walze 10 ist achsparallel zur Beschickungswalze 30 angeordnet und berührt diese entlang einer Berührlinie. Die Beschickungswalze 30 trägt infolge ihrer durch einen Pfeil angegebenen Drehung die keramische Emulsion 9 zur Walze 10 und rollt die keramische Emulsion 9 auf die Oberfläche der Walze 10 auf. Mittels der Walze 10 wird das Keramikmaterial 6 in das Material der unterhalb in Richtung eines Pfeils 28 entlang geführten Faserbahn 4 eingewalzt. Hierzu liegt die Walze 10 mit Anpressdruck auf der Faserbahn 4 auf. Es wird ein Tränken der Faserbahn 4 mit der Emulsion 9 durchgeführt. Die flächige, durchlässige Faserbahn 4 nimmt dabei das feingemahlene Keramikmaterial 6 innerhalb ihres gesamten Querschnitts auf.

Die endlose Faserbahn 4 durchläuft anschließend in Richtung des Pfeils 28 zwei achsparallel zueinander angeordnete, ineinander kämmende gewellte Walzen 20, 20', wodurch die mit dem Keramikmaterial 6 imprägnierte Faserbahn 4 eine gewellte Form erhält. Die Wellen der gewellten Walzen 20, 20' sind wechselseitig etwa konisch ausgeführt, wodurch auch die Wellen der Faserbahn 4 entsprechend der Darstellung nach Fig. 4 wechselseitig konisch, d.h. mit in der Durchströmungsrichtung sich erweiterndem bzw. verengendem Querschnitt geformt werden. Die beiden gewellten Walzen 20, 20' sind temperiert. Dies führt zu einem leichten Antrocknen, jedoch nicht vollständigen Durchtrocknen der gewellten, mit der Emulsion 9 getränkten Faserbahn 4, wodurch die Wellenform stabilisiert wird.

Eine weitere Faserbahn 4' wird in entgegengesetzter Richtung entsprechend einem Pfeil 27 der gezeigten Vorrichtung zugeführt und läuft um eine Andruckwalze 29 um. Bezogen auf die durch den Pfeil 27 angegebene Bewegungsrichtung liegt vor der Andruckwalze 29 ein Sieb 15 auf der Faserbahn 4' auf. Oberhalb des Siebes 15 ist auf diesem ebenfalls eine wässrige Emulsion 9 mit dem Keramikmaterial 6 bevorratet. Die Emulsion 9 wird mittels einer Rakel 11 unter Druck durch das Sieb hindurch in das Material der Faserbahn 4' hineingestrichen, wodurch eine Tränkung der Faserbahn 4' mit der Emulsion 9 erfolgt. Alternativ kann auch eine Trockenimprägnierung der Faserbahn 4' mit dem Keramikmaterial 6 erfolgen. Auch kann es zweckmäßig sein, eine Imprägnierung der Faserbahn 4' mit einer Walzenanordnung 10, 30, 31 entsprechend der gegenüberliegenden Faserbahn 4 vorzunehmen. Auch für die gewellte Faserbahn 4 kann eine Imprägnierung mittels eines Siebes 15 und einer Rakel 11 zweckmäßig sein.

Die Andruckwalze 29 liegt an der unteren gewellten Walze 20 an. Infolge der gegenläufigen Drehung der Andruckwalze 29 und der gewellten Walze 20 werden die glatte Faserbahn 4' und die gewellte Faserbahn 4 aneinander angedrückt und miteinander verbunden. In Durchlaufrichtung hinter der Walzenanordnung 29, 20 entsteht ein in Figur 4 näher dargestelltes Halbzeug 17.

Figur 4 zeigt eine vergrößerte, schematische Ausschnittsdarstellung des Halbzeuges 17 nach Figur 3. Die gewellte Faserbahn 4 liegt an ihren Wellenbergen entlang von Kontaktlinien 19, 19' an der gestrichelt angedeuteten, darüber liegenden glatten Faserbahn 4' an und ist entlang der Kontaktlinien 19, 19' mit ihr verbunden. Die Verbindung kann durch einen geeigneten Leim erfolgen. Im gezeigten Ausführungsbeispiel ist die Verbindung durch die keramische Emulsion 9 in den Faserbahnen 4, 4' hergestellt. Es kann auch zweckmäßig sein, entlang der Kontaktlinien 19, 19' zusätzliche keramische Emulsion 9, ggf. in angedickter Form aufzutragen, um eine Verbindung der beiden Faserbahnen 4, 4' zu erreichen. Im verbundenen Zustand des Halbzeuges 17 sind durch die Wellstruktur der Faserbahn 4 und die glatte Form der Faserbahn 4' die späteren Gaskanäle 18, 18' vorgeformt, wobei Seitenwände der gewellten Faserbahn 4 für die Bildung der späteren Filterabschnitte 3 vorgesehen sind.

Das mit der keramischen Emulsion 9 getränkte Halbzeug 17 wird in feuchtem Zustand, also bei noch nicht durchgetrockneter Emulsion 9, in die Form des späteren Filterkörpers 1 nach Figur 1 aufgewickelt oder auch gestapelt und anschließend getrocknet. Beim Aufwickeln bzw. Stapeln werden Wellentäler der gewellten Faserbahn 4 entlang von Kontaktlinien 19" mit der darunter liegenden glatten Faserbahn 4' verbunden, wodurch neben den Gaskanälen 18 auch die weiteren Gaskanäle 18' in radialer Richtung und in Umfangsrichtung des etwa zylindrischen Filterkörpers 1 (Figur 1) geschlossen sind. Die Verbindung an den Kontaktlinien 19" erfolgt in gleicher Weise wie an den Kontaktlinien 19, 19'.

Der auf diese Weise gebildete Filterrohling wird nach dem Trocknungsprozess in einem Sinterofen unter Einwirkung von Temperatur gesintert, wobei das Keramikmaterial 6 zu einem monolithischen Keramikkörper zusammengesintert wird. Bei der hohen Sintertemperatur verbrennt das Material der Faserbahnen 4, 4', wodurch eine bestimmte Porosität des Keramikmaterials 6 erreicht wird. Die Porosität ist derart ausgebildet, dass der Abgasstrom 2 (Figur 1) quer zur Fläche der keramischen Filterabschnitte 3 durch diese hindurchströmen kann.

Der Querschnitt der Gaskanäle 18, 18' verändert sich entlang der Axialrichtung 38, und zwar verengen sich die Querschnitte der eingangsseitigen Gaskanäle 18 von der Einströmseite 33 zur Ausströmseite 34 hin. Umgekehrt erweitern sich die Querschnitte der ausgangsseitigen Gaskanäle 18' von der Einströmseite 33 zur Ausströmseite 34 hin, wobei jedoch bei sämtlichen Gaskanälen 18, 18' die Kanalhöhe konstant bleibt. Dies wird erreicht durch eine Wellenform der Faserbahn 4 mit an der Einströmseite 33 breiten und an der Ausströmseite 34 schmalen Wellenbergen. Im gezeigten Ausführungsbeispiel nimmt die Breite der Wellenberge von der Einströmseite 33 zur Ausströmseite 34 hin linear ab. Infolge der konstanten Kanalhöhe und einer eindimensionalen, etwa konischen Krümmung der Faserbahn 4 ist auch der Querschnittsverlauf etwa linear. Es kann aber auch ein abweichender, nichtlinearer Verlauf insbesondere durch mehrdimensionale räumliche Krümmung der Faserbahn 4 zweckmäßig sein. Alternativ kann es auch eine Ausgestaltung der Wellen vorteilhaft sein, bei der die Gaskanäle 18, 18' von der Einströmseite 33 zur Ausströmseite 34 hin einen konstanten Querschnitt aufweisen.

Der entlang von Pfeilen 23 in die Gaskanäle 18 eintretende Abgasstrom 2 (Fig. 1) dringt entlang der gesamten Lauflänge der Gaskanäle 18, 18' durch die Filterabschnitte 3 entsprechend Pfeilen 24 hindurch. Dadurch verringert sich der eingangsseitige Volumenstrom 23 im Gaskanal 18 entlang dessen Lauflänge, während sich der ausgangsseitige Volumenstrom 25 im Gaskanal 18' entlang dessen Lauflänge vergrößert. Der vorstehend beschriebene Querschnittsverlauf der Gaskanäle 18, 18' führt dazu, dass die Strömungsgeschwindigkeit innerhalb der Gaskanäle 18, 18' sowie die über die Filterabschnitte 3 gemessene Druckdifferenz zwischen den Gaskanälen 18, 18' entlang deren Lauflänge zumindest näherungsweise konstant sind. Die Filtrierbelastung der Filterabschnitte 3 ist dadurch entlang der Lauflänge der Gaskanäle 18, 18' zumindest näherungsweise konstant. In den übrigen Merkmalen und Bezugszeichen stimmt das Ausführungsbeispiel nach Figur 4 mit demjenigen nach Figur 1 überein.

Figur 5 zeigt in perspektivischer Schemadarstellung die endlose Faserbahn 4'. Das nachfolgend Beschriebene gilt sinngemäß auch für die weitere Faserbahn 4 (Figur 3). Die Faserbahnen 4, 4' bestehen aus Fasern 5. Hierzu kann ein Filz, ein textiles Gewebe oder Gewirke vorgesehen sein. Bevorzugt ist ein offenes, durchlässiges Filterpapier gewählt. Die Faserbahn 4' ist flächig und durchlässig in dem Sinne, dass das feingemahlene Keramikmaterial 6 (Figur 3) zwischen Fasern 5 der Faserbahn 4 eindringen kann. Die Durchlässigkeit der Faserbahn 4 und der Imprägnierungsprozess nach Figur 3 sind derart aufeinander abgestimmt, dass ein Teil der Fasern 5 nach dem Imprägnieren mit dem Keramikmaterial 6 (Figur 3) an beiden gegenüberliegenden Oberflächen 7, 8 der Faserbahn 4 frei liegen. Dies führt beim Freibrennen der Fasern 5 während des Sinterprozesses dazu, dass der gesinterte keramische Filterabschnitt 3 durchgängig von einer Oberfläche 7 bis zur gegenüberliegenden Oberfläche 8 porös und damit quer zur Fläche des Filterabschnittes 3 gasdurchlässig für den Abgasstrom 2 (Figur 1) ist.

Für bestimmte Anwendungsfälle kann es zweckmäßig sein, zumindest abschnittsweise eine verringerte Porosität und damit zumindest näherungsweise eine Gasdichtigkeit herbeizuführen. Beispielsweise kann der Filterkörper 1 (Figur 1) im Bereich der glatten Faserbahn 4' eine derart geringe Porosität aufweise, dass er im technischen Sinne des Filtriervorganges praktisch gasundurchlässig ist, während eine spürbare Gasdurchlässigkeit nur im Bereich der gewellten Faserbahn 4 gewünscht wird. In diesem Falle erfolgt neben der tränkenden Imprägnierung der Faserbahn 4' auch eine geschlossene Oberflächenbeschichtung mit dem Keramikmaterial 6 (Figur 3) an zumindest einer der beiden Oberflächen 7, 8, ohne dass dort die Fasern 5 freiliegen. In diesem Falle entsteht beim Sintern ein geschlossener Keramikkörper, der im Bereich der Oberfläche 7, 8 kaum porös und damit im technischen Sinne gasundurchlässig ist. Die Einstellung der Gasdurchlässigkeit bzw. Gasdichtigkeit kann auch durch entsprechende Einstellung des Keramikmaterials 6 herbeigeführt bzw. unterstützt werden.

Es kann zweckmäßig sein, die Faserbahnen 4, 4' als unbeschnittenes Endlosmaterial vollflächig mit dem Keramikmaterial 6 (Figur 3) zu imprägnieren. Nicht imprägnierte Abschnitte 12 können dabei beispielsweise durch Ausstanzung von Ausschnitten 16 zur späteren Bildung von Öffnungen 13 (Fig. 2) oder durch eine Beschneidung eines begrenzten Flächengebildes 36 an dessen Randbereich 26 gebildet werden. Im gezeigten Ausführungsbeispiel nach Figur 5 sind nicht imprägnierte Abschnitte 12 vorgesehen, die selektiv von einer Imprägnierung mit dem Keramikmaterial 6 ausgenommen werden. Ein Teil der nicht imprägnierten Abschnitte 12 wird zur späteren Bildung der Öffnungen 13 (Figur 2) von der Imprägnierung ausgenommen. Ein weiterer nicht imprägnierter Abschnitt 12 ist durch den Randbereich 26 gebildet, der das begrenzte Flächengebilde 36 umgibt. Das begrenzte Flächengebilde 36 weist die Kontur auf, die zum Wickeln des Filterkörpers 1 nach Figur 1 erforderlich ist. Das Flächengebilde 36 kann durch Beschneiden der Faserbahn 4 insbesondere durch Ausstanzen der Umfangskontur des Flächengebildes 36 sowie durch Ausstanzen der Ausschnitte 16 hergestellt werden. Es kann auch zweckmäßig sein, auf ein Ausstanzen der Ausschnitte 16 zu verzichten und lediglich die zugehörigen Abschnitte 12 von der Imprägnierung mit dem Keramikmaterial 6 (Figur 3) auszunehmen. Dies erfolgt in weiter unten näher beschriebener Weise. Die nur abschnittsweise imprägnierte und/ oder beschnittenen Faserbahnen 4, 4' werden in vorstehend beschriebener Weise zu dem Halbzeug 17 gefügt, welches anschließend zu einem Rohling des Filterkörpers 1 nach Fig. 1 geformt wird. Die imprägnierten Bereiche der Faserbahnen 4, 4' nehmen dabei die Gestalt des zu bildenden Filterkörpers 1 (Fig. 1, 2) an. Beim abschließenden Sinterprozess verbrennen dann die nicht beschnittenen und nicht imprägnierten Abschnitte 12 vollständig und hinterlassen den Filterkörper 1 in seiner nach den Fig. 1 und 2 vorgesehenen Form einschließlich der Öffnungen 13 (Figur 2).

Der Darstellung nach Figur 3 ist zu entnehmen, dass die Walze 10 eine Oberflächenstrukturierung 14 aufweist. Diese entspricht in ihrer Form der Kontur des Flächengebildes 36 nach Figur 4. Die keramische Emulsion 9 wird nur durch die erhabenen Flächen der Oberflächenstrukturierung 14 unter Druck in die Faserbahn 4 eingewalzt. In zwischenliegenden, in radialer Richtung zurückversetzten Bereichen der Oberflächenstrukturierung 14 kann keine Imprägnierung mit dem Keramikmaterial 6 erfolgen, so dass die Faserbahn 4 analog zur Faserbahn 4' nach Figur 5 nur teilweise und unter Bildung der nicht imprägnierten Abschnitte 12 mit dem Keramikmaterial 6 imprägniert wird.

Eine alternative Form der Herstellung von nicht imprägnierten Abschnitten 12 in der Faserbahn 4' ergibt sich aus der Darstellung nach Figur 3 im Bereich des Siebes 15. Das Sieb 15 ist vergleichbar zum Siebdruckverfahren mit schematisch angedeuteten Abdeckungen 35 versehen. Die Abdeckungen 35 entsprechen in ihrer Kontur der Form der nicht imprägnierten Abschnitte 12 nach Figur 5. Beim Aufstreichen der keramischen Emulsion 9 unter Druck mittels der Rakel 11 verhindern die Abdeckungen 35, ggf. auch die Ausstanzungen bzw. Ausschnitte 16 (Fig. 5) partiell eine Tränkung und bilden die nicht imprägnierten Abschnitte 12.

Der Darstellung nach Figur 3 ist noch zu entnehmen, dass vor der Zusammenfügung der beiden Faserbahnen 4, 4' Raupen 21 aus keramischem Material auf die gewellte Faserbahn 4 entsprechend einem Pfeil 32 aufgebracht werden. Die keramischen Raupen 21 werden zwischen den beiden Faserbahnen 4, 4' eingequetscht und bilden später die Verschlussstopfen 22, 22' nach Figur 1. Für die wechselseitige Anordnung der Verschlussstopfen 22, 22' nach Figur 1 kann es zweckmäßig sein, die Raupen 21 unterbrochen aufzubringen. Für bestimmte Anwendungsfälle kann es auch zweckmäßig sein, die Verschlussstopfen 22, 22' in Umfangsrichtung durchgängig anzuordnen, wobei dann auch die zugeordneten Raupen 21 durchgängig aufgebracht werden. Die Raupen 21 bestehen aus einem feuchten, weichen keramischen Material und werden gemeinsam mit den Faserbahnen 4, 4' getrocknet und anschließend gesintert, wodurch ein monolithischer, keramischer Filterkörper 1 nach Figur 1 entsteht.

Im gezeigten Ausführungsbeispiel erfolgt zunächst eine Imprägnierung der Faserbahnen 4, 4' mit dem Keramikmaterial 6 (Figur 3) und anschließend die Formgebung mit der Wellstruktur der Faserbahn 4, die Zusammenfügung zum Halbzeug 17 und Aufwickeln zum Rohling des Filterkörpers 1 nach Figur 1. Dieser Rohling wird anschließend getrocknet und schließlich gesintert. Es kann auch zweckmäßig sein, den Rohling des Filterkörpers 1 nach Figur 1 zunächst aus nicht imprägnierten Faserbahnen 4, 4' in vorgenannter Weise zu beschneiden und zu formen und erst anschließend beispielsweise in einem Tauchbad mit dem Keramikmaterial 6 (Figur 3) zu tränken. Daran schließen sich dann ein Trocknungsprozess und schließlich der Sinterprozess an.

## Patentansprüche

1. Dieselpartikelfilter umfassend einen keramischen Filterkörper (1) aus einem Keramikmaterial (6) zur Filtrierung eines Abgasstromes (2) eines Dieselmotors, wobei der Filterkörper (1) Gaskanäle (18, 18') mit flächigen und porösen Filterabschnitten (3) aufweist, die zur Durchströmung mit dem Abgasstrom (2) quer zur Fläche der Filterabschnitte (3) vorgesehen sind, wobei der Filterkörper (1) aus mindestens einer keramisch imprägnierten Faserbahn (4), insbesondere Papier derart unter Temperatur durch sintern gebildet ist, dass Fasern (5) des Fasermaterials freigebrannt sind, und dass das Keramikmaterial (6) unter Bildung des durchgängig zwischen seinen beiden Oberflächen (7, 8) porösen und gasdurchlässigen Filterabschnittes (3) zusammengesintert ist, wobei mindestens eine Faserbahn (4) zur Bildung von Gaskanäle (18, 18') gewellt ausgeführt und zur Bildung des Filterkörpers (1) in mehreren Schichten übereinander geschichtet ist, **dadurch gekennzeichnet, dass** sich der Querschnitt zumindest eines Teiles der Gaskanäle (18, 18') von einer Einströmseite (33) zu einer Ausströmseite (34) hin verändert, wobei zur Bildung des geschichteten Filterkörpers (1) bezogen auf seine Schichtungsrichtung abwechselnd eine gewellte Faserbahn (4) und eine glatte Faserbahn (4') übereinander liegen und benachbarte Gaskanäle (18, 18') wechselseitig auf einer Einströmseite (33) und auf einer Ausströmseite (34) verschlossen sind und wobei Filterabschnitte (3) durch die gewellte Faserbahn (4) gebildet sind, während das Keramikmaterial (6) der glatten Faserbahn (4') im gesinterten Zustand gasundurchlässig ist, wobei
sich der Querschnitt der eingangsseitigen Gaskanäle (18) von der Einströmseite (33) zur Ausströmseite (34) hin verengt und sich der Querschnitt der ausgangsseitigen Gaskanäle (18') von der Einströmseite (33) zur Ausströmseite (34) hin erweitert.

2. Dieselpartikelfilter nach Anspruch 1, **dadurch gekennzeichnet, dass** die Gaskanäle (18, 18') in der Radialrichtung (37) eine konstante Höhe aufweisen.

3. Dieselpartikelfilter nach einem der Ansprüche 1 bis 2, **dadurch gekennzeichnet, dass** die gewellte Faserbahn (4) eindimensional gekrümmt ist.

4. Dieselpartikelfilter nach einem der Ansprüche 1 bis 3, **dadurch gekennzeichnet, dass** die Schichtung der mindestens einen Faserbahn (4) durch Aufwickeln zu einem Wickelkörper gebildet ist.

5. Dieselpartikelfilter nach einem der Ansprüche 1 bis 4, **dadurch gekennzeichnet, dass** benachbarte Gaskanäle (18, 18') wechselseitig auf einer Einströmseite (33) und auf einer Ausströmseite (34) durch Verschlussstopfen (22, 22') aus Keramikmaterial verschlossen sind.

6. Dieselpartikelfilter nach einem der Ansprüche 1 bis 5, **dadurch gekennzeichnet, dass** mindestens eine Faserbahn (4, 4') nicht imprägnierte Abschnitte (12) zur Bildung von Öffnungen (13) im Filterkörper (1) aufweist.

## Claims

1. Diesel particulate filter comprising a ceramic filter body (1) made of ceramic material (6) for filtering an exhaust-gas flow (2) of a diesel engine, the filter body (1) featuring gas channels (18, 18') with plane and porous filter sections (3) which are provided for being flowed through by the exhaust-gas flow (2) at right angle to the plane of the filter sections (3), the filter body (1) being formed of at least one ceramically impregnated fiber web (4), in particular paper, under temperature by sintering such that fibers (5) of the fiber material are burned free and that the ceramic material (6) is sintered together by forming between its two surfaces (7, 8) the end-to-end porous and gas-permeable filter section (3), at least one fiber web (4) being realized in undulated design for forming the gas channels (18, 18') and layered on top of one another in several layers for forming the filter body (1), **characterized in that** the cross-section of at least one part of the gas channels (18, 18') changes from an inflow side (33) towards an outflow side (34), an undulated fiber web (4) and a smooth fiber web (4') being laid alternately on top of each other for forming the layered filter body (1) in relation to its layer direction and adjacent gas channels (18, 18') being alternately closed on an inflow side (33) and an outflow side (34) and filter sections (3) being formed by the undulated filter web (4) while the ceramic material (6) of the smooth fiber web (4') is gas-impermeable in sintered state, the cross-section of the inflow-sided gas channels (18) being narrowed from the inflow side (33) towards the outflow side (34) and the cross-section of the outflow-sided gas channels (18') being enlarged from the inflow side (33) towards the outflow side (34).

2. Diesel particulate filter according to claim 1, **characterized in that** the gas channels (18, 18') feature a constant height in radial direction (37).

3. Diesel particulate filter according to one of the claims 1 to 2, **characterized in that** the undulated fiber web (4) is bent one-dimensionally.

4. Diesel particulate filter according to one of the claims 1 to 3, **characterized in that** the layering of the at least one fiber web (4) is formed by winding it to a winding form.

5. Diesel particulate filter according to one of the claims 1 to 4, **characterized in that** adjacent gas channels (18, 18') are closed alternately at an inflow side (33) and at an outflow side (34) by means of plugs (22, 22') made of ceramic material.

6. Diesel particulate filter according to one of the claims 1 to 5, **characterized in that** at least one fiber web (4, 4') features non-impregnated sections (12) to form openings (13) in the filter body (1).

## Revendications

1. Filtre à particules diesel comprenant un corps de filtre (1) céramique réalisé dans un matériau céramique (6) destiné au filtrage d'un flux de gaz d'échappement (2) d'un moteur diesel, le corps de filtre (1) présentant des canaux de gaz (18, 18') avec des sections de filtre (3) planes et poreuses prévues pour être traversées par le flux de gaz d'échappement (2) en travers des sections de filtre (3), le corps de filtre (1) étant formé par au moins une bande de fibres (4) imprégnée de céramique, notamment par du papier, par frittage à haute température de sorte que des fibres (5) du matériau fibreux soient libérées par combustion et que le matériau céramique (6) soit assemblé par frittage par formation de la section de filtre (3) entièrement poreuse et perméable au gaz entre ses deux surfaces (7, 8), au moins une bande de fibres (4) étant exécutée de manière ondulée pour former des canaux de gaz (18, 18') et étant dotée de plusieurs couches superposées pour former le corps de filtre (1), **caractérisé en ce que** la section d'au moins une partie des canaux de gaz (18, 18') change d'un côté d'admission (33) vers un côté d'écoulement (34), une bande de fibres (4) ondulée et une bande de fibres lisse (4') se superposant dans des sens de stratification alternés pour former le corps de filtre (1) stratifié, des canaux de gaz (18, 18') voisins étant fermés en alternance d'un côté d'admission (33) et d'un côté d'écoulement (34) et des sections de filtre (3) étant formées par la bande de fibres (4) ondulée, tandis que, en état fritté, le matériau céramique de la bande de fibres (4') lisse est imperméable au gaz, la section des canaux de gaz (18) côté admission diminuant du côté d'admission (33) vers le côté d'écoulement (34) et la section des canaux de gaz (18') côté écoulement augmentant du côté d'admission (33) vers le côté d'écoulement (34).

2. Filtre à particules diesel selon la revendication 1, **caractérisé en ce que** les canaux de gaz (18, 18') ont une hauteur constante en sens radial (37).

3. Filtre à particules diesel selon l'une des revendications 1 à 2, **caractérisé en ce que** la bande de fibres (4) ondulée est courbée à une dimension.

4. Filtre à particules diesel selon l'une des revendications 1 à 3, **caractérisé en ce que** la stratification de la bande de fibres (4), au moins au nombre d'une, est réalisée par enroulement en tant que bobine.

5. Filtre à particules diesel selon l'une des revendications 1 à 4, **caractérisé en ce que** des canaux de gaz (18, 18') voisins sont obturés par des bouchons (22, 22') en un matériau céramique en alternance d'un côté d'admission (33) et d'un côte d'écoulement (34).

6. Filtre à particules diesel selon l'une des revendications 1 à 5, **caractérisé en ce qu'**une bande de fibres (4, 4'), au moins au nombre d'une, présente des sections non imprégnées (12) pour former des orifices (13) dans le corps de filtre (1).
